# EUROPÄISCHE PATENTSCHRIFT

(11) **EP 3 523 941 B1**
(45) Veröffentlichungstag und Bekanntmachung des Hinweises auf die Patenterteilung: **20.03.2024**
(21) Anmeldenummer: 17787873.3
(22) Anmeldetag: 06.10.2017
(51) Int. Cl.: H04L 12/40, H04L 9/40

(54) **KOMMUNIKATIONSDATEN-AUTHENTIFIZIERUNGSVORRICHTUNG FÜR EIN FAHRZEUG**
COMMUNICATION DATA AUTHENTICATION DEVICE FOR A VEHICLE
DISPOSITIF D'AUTHENTIFICATION DE DONNÉES DE COMMUNICATION POUR UN VÉHICULE

(30) Priorität: 06.10.2016 DE 102016219348
(43) Veröffentlichungstag der Anmeldung: 14.08.2019
(73) Patentinhaber: Continental Automotive Technologies GmbH, 30165 Hannover (DE)
(72) Erfinder: STÄHLIN, Ulrich, 65760 Eschborn (DE); MENZEL, Marc, 35096 Weimar (Lahn) (DE); RINK, Klaus, 63517 Rodenbach (DE)
(74) Vertreter: Continental Corporation
(86) Internationale Anmeldenummer: PCT/DE2017/200107
(87) Internationale Veröffentlichungsnummer: WO 2018/065016

(56) Entgegenhaltungen:
- EP-A1- 2 892 199
- DE-A1-102016 101 327
- JP-A- 2016 134 170
- US-A1- 2015 271 201

## Beschreibung

### TECHNISCHES GEBIET

Die vorliegende Erfindung betrifft eine Authentifizierungsvorrichtung für ein Fahrzeug und ein Verfahren zum Authentifizieren von Kommunikationsdaten in einem Fahrzeug.

### TECHNISCHER HINTERGRUND

Fahrzeuge, welche für das automatisierte Fahren ausgebildet sind, stellen besonders hohe Anforderungen an Fahrzeugsysteme. In einer automatischen Fahrsituation kann nicht immer sichergestellt werden, dass ein Fahrer das Verkehrsgeschehen und die von seinem Fahrzeug umgesetzte automatisierte Fahrfunktion wahrnimmt und plausibilisiert. Ferner kann nicht sichergestellt werden, dass der Fahrer immer in der Lage ist, bei einer festgestellten Fehlfunktion in einer sicherheitsunkritischen Zeitspanne die Kontrolle über das Fahrzeug erfolgreich zu übernehmen. Aus diesem Grund müssen Fahrzeugsysteme wie Steuergeräte ausgebildet sein, die entsprechenden Aufgaben zuverlässig und selbständig zu übernehmen.

Die daraus resultierende gesteigerte Komplexität der Fahrzeugarchitektur kann jedoch zu neuen Angriffspunkten für Störungs- oder Missbrauchsversuche führen. Um dies zu verhindern können Sicherheitssysteme für Steuergeräte eingesetzt werden. Diese Sicherheitssysteme werden jedoch meist in Hinblick auf bestimmte Missbrauchs- oder Angriffsszenarien entwickelt. Angriffe oder Missbrauchsversuche, die während der Entwicklung noch nicht bekannt waren oder nicht als relevant eingestuft wurden, werden daher typischerweise nicht erkannt bzw. verhindert.

Die EP 2 892 199 A1 betrifft ein System zum Bereitstellen von Sicherheit für ein fahrzeuginternes Kommunikationsnetzwerk, wobei das System einen Datenüberwachungs- und -verarbeitungs-Hub sowie mindestens ein Modul zum Überwachen von Nachrichten im Kommunikationsverkehr umfasst, wobei das Netzwerk einen Bus und mindestens einen mit dem Bus verbundenen Knoten aufweist. Das Modul zum Überwachen von Nachrichten umfasst dabei eine Kommunikationsschnittstelle, welche zur Unterstützung der Kommunikation mit dem Hub ausgebildet ist, einen Speicher mit Software, welche Daten umfasst, welche wiederum Nachrichten charakterisieren, die der Knoten während des normalen Betriebs des Knotens sendet und empfängt, mindestens einen Kommunikationsport, über den das Modul Nachrichten empfängt und überträgt, einen Prozessor, welcher über den Port empfangene Nachrichten verarbeitet, um: (1) eine anormale Nachricht in den empfangenen Nachrichten zu identifizieren, welche anzeigt, dass das fahrzeuginterne Netzwerk einem Cyberangriff ausgesetzt ist; (2) eine Aktion, die vom Modul ausgeführt werden soll, welche die anormale Nachricht beeinflusst, zu bestimmen; und (3) Daten als Reaktion auf die anormale Nachricht an den Hub zur Verarbeitung durch den Hub über die Kommunikationsschnittstelle zu übertragen.

Die DE 10 2016 101327 A1 betrifft ein Verfahren und ein System zum Reagieren auf einen nicht autorisierten elektronischen Zugriff auf ein Fahrzeug, wobei das Verfahren und das System einen nicht autorisierten Zugriff auf elektronische Hardware in einem Fahrzeug detektieren und eine geeignete fahrzeuginterne Reaktion auf den nicht autorisierten Zugriff in Form einer Gegenmaßnahme elektronischer Hardware einsetzen.

Die JP 2016 134170 A betrifft ein Verfahren zum Verarbeiten von Anomalien durch Ergreifung geeigneter Gegenmaßnahmen, falls die Wahrscheinlichkeit hoch ist, dass ein Fahrzeug illegal kontrolliert wird, um die Auswirkungen zu unterdrücken.

Die US 2015/271201 A1 betrifft ein Gerät zur Erkennung und Verhinderung eines Angriffs auf ein Fahrzeug über seine Kommunikationskanäle, wobei das Gerät folgendes umfasst: eine Eingabeeinheit, welche zum Sammeln von Echtzeit- und/oder Offline-Daten von verschiedenen Quellen (wie Sensoren, netzwerkbasierte Dienste, Navigationsanwendungen, elektronische Steuergeräte für Fahrzeuge, Busnetze des Fahrzeugs, Teilsysteme des Fahrzeugs und Onboard-Diagnose) ausgebildet ist; eine Datenbank zum Speichern der Daten; eine Detektionseinheit in Kommunikation mit der Eingabeeinheit; und eine Aktionseinheit, welche in Kommunikation mit der Detektionseinheit steht und ausgebildet ist, einen Alarm über die Kommunikationskanäle zu senden und/oder den Angriff durch Unterbrechen oder Ändern der angegriffenen Kommunikationskanäle zu verhindern.

### BESCHREIBUNG DER ERFINDUNG

Es ist daher die Aufgabe der vorliegenden Erfindung, ein effizientes Konzept zum Überwachen einer Fahrzeugkommunikation, insbesondere zum Authentifizieren von Kommunikationsdaten, welche von einem Kommunikationsnetzwerk eines Fahrzeugs übermittelt werden, zu schaffen.

Diese Aufgabe wird durch die Gegenstände der unabhängigen Ansprüche gelöst. Vorteilhafte Ausführungsformen der Erfindung sind Gegenstand der abhängigen Ansprüche, der Beschreibung sowie der Figuren.

Gemäß einem ersten Aspekt betrifft die Erfindung eine Authentifizierungsvorrichtung für ein Fahrzeug, wobei das Fahrzeug ein Kommunikationsnetzwerk zum Übermitteln von Kommunikationsdaten aufweist, mit einer Kommunikationsschnittstelle, welche mit dem Kommunikationsnetzwerk des Fahrzeugs verbindbar ist, wobei die Kommunikationsschnittstelle ausgebildet ist, die Kommunikationsdaten zu empfangen, und einem Prozessor, welcher ausgebildet ist, zumindest eine Charakteristik der empfangenen Kommunikationsdaten zu erfassen, wobei der Prozessor ausgebildet ist, die Kommunikationsdaten auf der Basis eines Vergleichs der erfassten Charakteristik mit einer Referenzcharakteristik zu authentifizieren, und eine Authentizität der Kommunikationsdaten zu erfassen, falls die Charakteristik der Kommunikationsdaten der Referenzcharakteristik entspricht, und wobei der Prozessor weiterhin ausgebildet ist, einen Empfänger der Kommunikationsdaten in dem Kommunikationsnetzwerk zu erfassen, wobei der Prozessor ausgebildet ist, die Kommunikationsschnittstelle, ansprechend auf das Erfassen der Authentizität der Kommunikationsdaten zum Weiterleiten der Kommunikationsdaten an den Empfänger anzusteuern. Dadurch wird der Vorteil erreicht, dass die Kommunikation in dem Kommunikationsnetzwerk des Fahrzeugs effizient überwacht werden kann. Durch die Überprüfung der Authentizität der Kommunikationsdaten können Manipulations- oder Missbrauchsversuche der Fahrzeugkommunikation, beispielsweise mittels gefälschter oder manipulierter Kommunikationsdaten, erkannt werden. Weiterhin können Kommunikationsdaten, deren Authentizität festgestellt wurde, effizient weitergeleitet werden. Der Prozessor kann den Empfänger der Kommunikationsdaten auf der Basis einer Adresse, insbesondere einer Netzwerkadresse, des Empfängers erfassen, wobei die Kommunikationsdaten die Adresse des Empfängers umfassen. Der Empfänger der Kommunikationsdaten kann eine Fahrzeugsteuerung sein, welche an das Kommunikationsnetzwerk angeschlossen ist.

Die Authentifizierung der Kommunikationsdaten kann eine Verifizierung der Echtheit der Kommunikationsdaten und/oder eine Identifizierung der Kommunikationsdaten umfassen. Ferner kann die Authentifizierung der Kommunikationsdaten eine Überprüfung der Echtheit und/oder der Richtigkeit der Kommunikationsdaten umfassen.

Die Kommunikationsdaten können Steuerbefehle an eine Fahrzeugsteuerung oder Messwerte von Fahrzeugsensoren umfassen, wobei die Fahrzeugsteuerung und/oder die Fahrzeugsensoren an das Kommunikationsnetzwerk angeschlossen sind. Die Kommunikationsdaten können ferner V2X (Vehicle-to-X)-Kommunikationsdaten umfassen, welche von einer V2X-Kommunikationsschnittstelle des Fahrzeugs empfangen wurden. Die Kommunikationsdaten können Kommunikationssignale oder Botschaften bilden.

Das Fahrzeug kann ein Kraftfahrzeug, insbesondere ein mehrspuriges Kraftfahrzeug wie ein Personenkraftwagen (PKW) oder ein Lastkraftwagen (LKW), oder ein einspuriges Kraftfahrzeug wie ein Motorrad, sein. Das Fahrzeug kann ferner ein Schienenfahrzeug, ein Wasserfahrzeug oder ein Luftfahrzeug, insbesondere ein Flugzeug oder ein Drehflügler, sein. Das Fahrzeug kann zur autonomen bzw. hochautomatisierten Fortbewegung ausgebildet sein.

Das Kommunikationsnetzwerk kann als Bussystem, insbesondere als Feldbus oder als Fahrzeugbus ausgebildet sein.

Der Prozessor kann als Steuereinheit des Fahrzeugs (Electronic Control Unit, ECU) ausgebildet sein, oder in eine Steuereinheit des Fahrzeugs integriert sein. Der Prozessor kann ferner als Mikroprozessor ausgebildet sein.

Die Authentifizierungsvorrichtung kann als ein Kommunikationssystem oder als Sicherheitssystem, insbesondere als Security-Observer, des Fahrzeugs ausgebildet sein.

Gemäß einer Ausführungsform umfassen die zumindest eine Charakteristik der empfangenen Kommunikationsdaten und die Referenzcharakteristik eine der folgenden Charakteristika: ein Inhalt der Kommunikationsdaten, ein Aufbau der Kommunikationsdaten, eine logische Abfolge der Kommunikationsdaten, eine zeitliche Abfolge der Kommunikationsdaten, eine Länge eines Kommunikationssignals, welches von den Kommunikationsdaten gebildet wird.

Erfindungsgemäß ist der Prozessor ausgebildet, eine fehlende Authentizität der Kommunikationsdaten zu erfassen, falls sich die Charakteristik der Kommunikationsdaten von der Referenzcharakteristik unterscheidet. Dadurch wird der Vorteil erreicht, dass nicht authentisierte Kommunikationsdaten effizient erfasst werden können.

Erfindungsgemäß ist der Prozessor ausgebildet, ansprechend auf das Erfassen der fehlenden Authentizität der Kommunikationsdaten eine Warnmeldung oder eine Fehlermeldung auszusenden, insbesondere an ein Sicherheitssystem des Fahrzeugs.

Dadurch wird der Vorteil erreicht, dass ein Sicherheitssystem oder ein Fahrer des Fahrzeugs effizient über die fehlende Authentizität der Kommunikationsdaten informiert werden können.

Die Warnmeldung und die Fehlermeldung können unterschiedliche Reaktionen des Sicherheitssystems auslösen. Beispielsweise wird bei einer Warnmeldung nur eine Warnung an den Fahrer des Fahrzeugs erzeugt, wohingegen bei einer Fehlermeldung das Kommunikationsnetzwerk zumindest teilweise deaktiviert wird.

Erfindungsgemäß ist der Prozessor ausgebildet, einen Grad der Abweichung der Charakteristik von der Referenzcharakteristik zu erfassen, wobei der Prozessor ausgebildet ist die Fehlermeldung auszusenden, falls der Grad der Abweisung einen ersten Schwellwert überschreitet, und eine Warnmeldung auszusenden, falls der Grad der Abweichung den ersten Schwellwert unterschreitet und einen zweiten Schwellwert überschreitet.

Der Grad der Abweichung kann ein Parameter oder ein Wert sein, welcher von dem Prozessor bei einem Vergleich der Charakteristik mit der Referenzcharakteristik auf der Basis eines Algorithmus ermittelt wird. Der Grad der Abweichung kann eine Stärke, ein Maß oder eine Größe der Abweichung sein. Der Schwellwert kann ein dynamischer Schwellwert sein, welcher beispielsweise von einer Art oder einem Inhalt der Kommunikationsdaten abhängt. Handelt es sich bei den Kommunikationsdaten beispielsweise um Kommunikationsdaten zur Ausführung besonders sicherheitsrelevanter Fahrzeugsysteme, beispielweise einer Fahrzeugsteuerung, so kann ein geringerer Schwellwert gewählt werden als bei Kommunikationsdaten mit einer geringeren Sicherheitsrelevanz.

Gemäß einer Ausführungsform ist der Prozessor ausgebildet, einen Absender der Kommunikationsdaten in dem Kommunikationsnetzwerk zu erfassen, wobei der Prozessor ausgebildet ist, ansprechend auf das Erfassen einer fehlenden Authentizität der Kommunikationsdaten, einen Teilabschnitt des Kommunikationsnetzwerks, welcher den Absender umfasst, von dem restlichen Kommunikationsnetzwerk zu trennen. Dadurch wird der Vorteil erreicht, dass Fahrzeugsysteme effizient von nicht authentifizierten Kommunikationsdaten geschützt werden können.

Der Absender kann eine Kommunikationsschnittstelle, beispielsweise eine V2X-Kommunikationsschnittstelle, ein Fahrzeugsensor, beispielsweise ein Geschwindigkeitssensor oder ein Beschleunigungssensor, oder eine Steuereinheit sein. Das Trennen eines Teilabschnitts des Kommunikationsnetzwerks kann über ein Deaktivieren eines Busknotens des Kommunikationsnetzwerks erfolgen.

Gemäß einer Ausführungsform umfasst die Authentifizierungsvorrichtung einen Speicher, wobei die Referenzcharakteristik in dem Speicher gespeichert ist.

Gemäß einer Ausführungsform ist die Kommunikationsschnittstelle ausgebildet, weitere Kommunikationsdaten in einem Einlernzeitintervall zu empfangen, wobei der Prozessor ausgebildet ist, eine Charakteristik der weiteren Kommunikationsdaten zu erfassen und als Referenzcharakteristik in dem Speicher zu speichern. Dadurch wird der Vorteil erreicht, dass die Referenzcharakteristik effizient auf der Basis einer jeweiligen Systemumgebung des Fahrzeugs erfasst werden können.

Gemäß einer Ausführungsform ist der Prozessor ausgebildet, die im Speicher gespeicherte Referenzcharakteristik auf der Basis der erfassten Charakteristik der Kommunikationsdaten zu ergänzen, insbesondere kontinuierlich zu ergänzen. Dadurch wird der Vorteil erreicht, dass Referenzcharakteristika bei sich ändernden Systemumgebungen des Fahrzeugs adaptiv angepasst werden können.

Gemäß einer Ausführungsform ist die Kommunikationsschnittstelle als BUS-Schnittstelle ausgebildet, wobei die BUS-Schnittstelle an das Kommunikationsnetzwerk des Fahrzeugs, welches insbesondere als Fahrzeugbus ausgebildet ist, anschließbar ist.

Gemäß einer Ausführungsform ist der Prozessor als Steuereinheit (Electronic Control Unit, ECU) des Fahrzeugs ausgebildet, oder in eine Steuereinheit des Fahrzeugs integriert.

Gemäß einem zweiten Aspekt betrifft die Erfindung ein Verfahren zum Authentifizieren von Kommunikationsdaten in einem Fahrzeug, wobei das Fahrzeug ein Kommunikationsnetzwerk zum Übermitteln der Kommunikationsdaten aufweist. Das Verfahren umfasst die folgenden Schritte: Empfangen der Kommunikationsdaten mit einer Kommunikationsschnittstelle, welche mit dem Kommunikationsnetzwerk des Fahrzeugs verbindbar ist, Erfassen zumindest einer Charakteristik der empfangenen Kommunikationsdaten, und Authentifizieren der Kommunikationsdaten auf der Basis eines Vergleichs der erfassten Charakteristik mit einer Referenzcharakteristik. Dadurch wird der Vorteil erreicht, dass die Kommunikation in dem Kommunikationsnetzwerk des Fahrzeugs effizient überwacht werden kann.

Gemäß einer Ausführungsform umfasst das Verfahren die weiteren folgenden Schritte: Erfassen einer fehlenden Authentizität der Kommunikationsdaten, falls sich die die Charakteristik der Kommunikationsdaten von der Referenzcharakteristik unterscheidet, und Aussenden einer Warnmeldung oder einer Fehlermeldung ansprechend auf das Erfassen der fehlenden Authentizität der Kommunikationsdaten. Dadurch wird der Vorteil erreicht, dass ein Sicherheitssystem oder ein Fahrer des Fahrzeugs effizient über die fehlende Authentizität eines Kommunikationssignals informiert werden können.

Gemäß einem dritten Aspekt betrifft die Erfindung ein Fahrzeug, insbesondere ein Kraftfahrzeug, mit einer Authentifizierungsvorrichtung nach dem ersten Aspekt der Erfindung.

Die Erfindung kann in Hardware und/oder Software realisiert werden.

### BESCHREIBUNG DER FIGUREN

Weitere Ausführungsbeispiele werden bezugnehmend auf die beiliegenden Figuren näher erläutert. Es zeigen:
- Fig. 1: eine schematische Darstellung einer Authentifizierungsvorrichtung für ein Fahrzeug gemäß einer Ausführungsform; und
- Fig. 2: ein Flussdiagramm eines Verfahrens zum Authentifizieren von Kommunikationsdaten in einem Fahrzeug gemäß einer Ausführungsform.

### DETAILIERTE BESCHREIBUNG DER FIGUREN

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

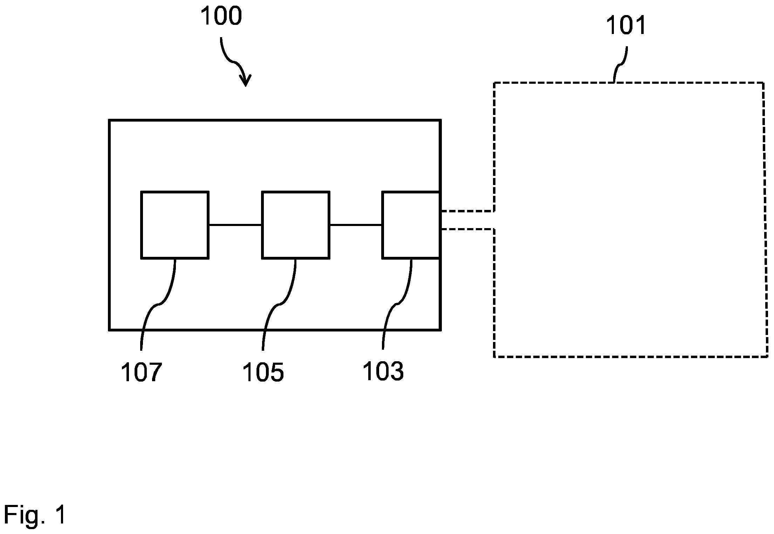

Fig. 1 zeigt eine schematische Darstellung einer Authentifizierungsvorrichtung 100 für ein Fahrzeug gemäß einer Ausführungsform.

Das Fahrzeug weist ein Kommunikationsnetzwerk 101, insbesondere ein Bussystem wie einen Feldbus oder einen Fahrzeugbus, zum Übermitteln von Kommunikationsdaten auf:
Die Authentifizierungsvorrichtung 100 umfasst eine Kommunikationsschnittstelle 103, welche mit dem Kommunikationsnetzwerk 101 des Fahrzeugs verbindbar ist, wobei die Kommunikationsschnittstelle 103 ausgebildet ist, die Kommunikationsdaten zu empfangen. Die Authentifizierungsvorrichtung 100 umfasst ferner einen Prozessor 105, welcher ausgebildet ist, zumindest eine Charakteristik der empfangenen Kommunikationsdaten zu erfassen, wobei der Prozessor 105 ausgebildet ist, die Kommunikationsdaten auf der Basis eines Vergleichs der erfassten Charakteristik mit einer Referenzcharakteristik zu authentifizieren.

Durch die Überprüfung der Authentizität der Kommunikationsdaten können Manipulations- oder Missbrauchsversuche der Fahrzeugkommunikation, beispielsweise mittels gefälschter oder manipulierter Kommunikationsdaten, erkannt werden.

Die Authentifizierung der Kommunikationsdaten kann eine Verifizierung der Echtheit der Kommunikationsdaten und/oder eine Identifizierung der Kommunikationsdaten umfassen. Ferner kann die Authentifizierung der Kommunikationsdaten eine Überprüfung der Echtheit und/oder der Richtigkeit der Kommunikationsdaten umfassen.

Die Kommunikationsdaten können Steuerbefehle an eine Fahrzeugsteuerung oder Messwerte von Fahrzeugsensoren umfassen, wobei die Fahrzeugsteuerung und/oder die Fahrzeugsensoren an das Kommunikationsnetzwerk 101 angeschlossen sind. Die Kommunikationsdaten können ferner V2X (Vehicle-to-X)-Kommunikationsdaten umfassen, welche von einer V2X-Kommunikationsschnittstelle des Fahrzeugs empfangen wurden. Die Kommunikationsdaten können Kommunikationssignale oder Botschaften bilden.

Das Fahrzeug kann ein Kraftfahrzeug, insbesondere ein mehrspuriges Kraftfahrzeug wie ein Personenkraftwagen (PKW) oder ein Lastkraftwagen (LKW), oder ein einspuriges Kraftfahrzeug wie ein Motorrad, sein. Das Fahrzeug kann ferner ein Schienenfahrzeug, ein Wasserfahrzeug oder ein Luftfahrzeug, insbesondere ein Flugzeug oder ein Drehflügler, sein. Das Fahrzeug kann zur autonomen bzw. hochautomatisierten Fortbewegung ausgebildet sein.

Die Kommunikationsschnittstelle 103 kann als BUS-Schnittstelle ausgebildet ist, welche an das Kommunikationsnetzwerk 101 des Fahrzeugs anschließbar ist, um die Kommunikationsdaten zu empfangen.

Der Prozessor 105 kann als Steuereinheit des Fahrzeugs (Electronic Control Unit, ECU) ausgebildet sein, oder in eine Steuereinheit des Fahrzeugs integriert sein. Der Prozessor 105 kann ferner als Mikroprozessor ausgebildet sein.

Die Authentifizierungsvorrichtung 100 kann als ein Kommunikationssystem oder als Sicherheitssystem, insbesondere als Security-Observer, des Fahrzeugs ausgebildet sein.

Die Authentifizierungsvorrichtung 100 in Fig. 1 umfasst ferner einen Speicher 107. Die Referenzcharakteristik kann in dem Speicher 107 gespeichert sein. Der Speicher 107 kann ein Flash-Speicher sein. Der Speicher 107 kann in die ECU des Fahrzeugs integriert sein.

Der Prozessor 105 kann ausgebildet sein, eine Authentizität der Kommunikationsdaten zu erfassen, falls die Charakteristik der Kommunikationsdaten der Referenzcharakteristik entspricht. Der Prozessor 105 kann ferner ausgebildet sein, eine fehlende Authentizität der Kommunikationsdaten zu erfassen, falls sich die Charakteristik der Kommunikationsdaten von der Referenzcharakteristik unterscheidet.

Die Charakteristik der empfangenen Kommunikationsdaten und die Referenzcharakteristik können jeweils zumindest eine der folgenden Charakteristika sein: ein Inhalt der Kommunikationsdaten, ein Aufbau der Kommunikationsdaten, eine logische Abfolge der Kommunikationsdaten, eine zeitliche Abfolge der Kommunikationsdaten, eine Länge eines Kommunikationssignals, welches von den Kommunikationsdaten gebildet wird.

Der Prozessor 105 kann ausgebildet sein, einen Empfänger der Kommunikationsdaten in dem Kommunikationsnetzwerk 101 zu erfassen. Der Prozessor 105 kann ferner ausgebildet sein, die Kommunikationsschnittstelle 103 ansprechend auf das Erfassen der Authentizität der Kommunikationsdaten zum Weiterleiten der Kommunikationsdaten an den Empfänger anzusteuern. Der Empfänger kann ein Adressat der Kommunikationsdaten in dem Kommunikationsnetzwerk 101 sein. Der Prozessor 105 kann den Empfänger auf der Basis einer Netzwerkadresse des Empfängers erfassen. Die Kommunikationsdaten können die Netzwerkadresse umfassen.

Der Empfänger ist beispielsweise eine Steuereinheit des Fahrzeugs oder ein Sicherheitssystem des Fahrzeugs. Der Empfänger kann ferner eine Anzeige, beispielsweise ein Display sein, auf welchem die Kommunikationsdaten für einen Fahrer visualisiert werden.

Der Prozessor 105 kann ausgebildet sein, ansprechend auf das Erfassen der fehlenden Authentizität der Kommunikationsdaten eine Warnmeldung oder eine Fehlermeldung auszusenden. Die Warnmeldung und/oder Fehlermeldung kann an ein Sicherheitssystem des Fahrzeugs ausgesendet werden.

Das Sicherheitssystem kann ausgebildet sein, den Fahrer ansprechend auf das Empfangen der Warn- oder Fehlermeldung zu informieren, beispielsweise mittels einer optischen Anzeige oder eines Warnsignals zu informieren. Das Sicherheitssystem kann ferner ausgebildet sein, ansprechend auf das Empfangen der Warn- oder Fehlermeldung eine weitere Kommunikationsschnittstelle des Fahrzeugs, insbesondere eine V2X-Kommunikationsschnittstelle des Fahrzeugs zum Aussenden der Warn- oder Fehlermeldung oder einer auf der Warn- oder Fehlermeldung basierenden weiteren Meldung anzusteuern.

Der Prozessor 105 kann ferner ausgebildet sein, einen Absender der Kommunikationsdaten in dem Kommunikationsnetzwerk 101 zu erfassen. Der Prozessor 105 kann ausgebildet sein, ansprechend auf das Erfassen der fehlenden Authentizität der Kommunikationsdaten, einen Teilabschnitt des Kommunikationsnetzwerks 101, welcher den Absender umfasst, von dem restlichen Kommunikationsnetzwerk 101 zu trennen.

Der Absender kann eine Kommunikationsschnittstelle, beispielsweise eine V2X-Kommunikationsschnittstelle, ein Fahrzeugsensor, beispielsweise ein Geschwindigkeitssensor oder ein Beschleunigungssensor, oder eine Steuereinheit sein. Das Trennen eines Teilabschnitts des Kommunikationsnetzwerks 101 kann über ein Deaktivieren eines Busknotens des Kommunikationsnetzwerks 101 erfolgen.

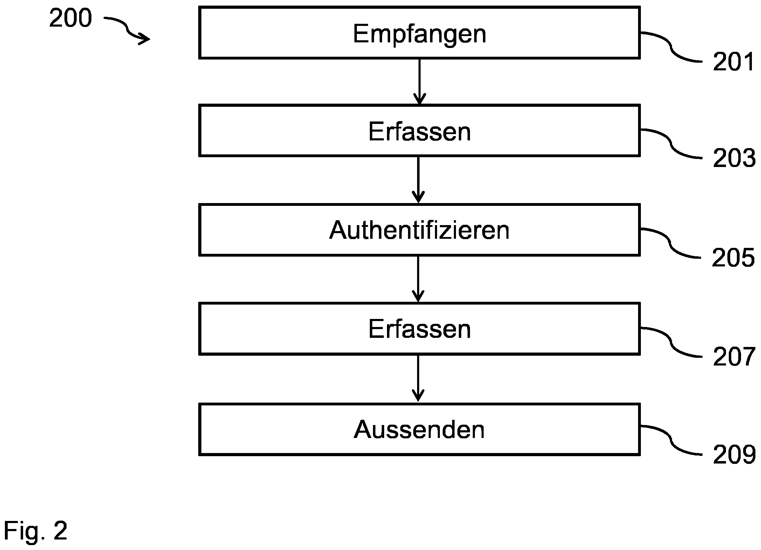

Fig. 2 zeigt ein Flussdiagramm eines Verfahrens 200 zum Authentifizieren von Kommunikationsdaten in dem Fahrzeug gemäß einer Ausführungsform. Das Fahrzeug weist dabei das Kommunikationsnetzwerk 101 zum Übermitteln der Kommunikationsdaten auf.

Das Verfahren 200 umfasst ein Empfangen 201 der Kommunikationsdaten mit der Kommunikationsschnittstelle 103, welche mit dem Kommunikationsnetzwerk 101 des Fahrzeugs verbindbar ist, ein Erfassen 203 zumindest einer Charakteristik der empfangenen Kommunikationsdaten und ein Authentifizieren 205 der Kommunikationsdaten auf der Basis eines Vergleichs der erfassten Charakteristik mit der Referenzcharakteristik. Das Verfahren 200 umfasst ferner ein Erfassen 207 einer fehlenden Authentizität der Kommunikationsdaten, falls sich die Charakteristik der Kommunikationsdaten von der Referenzcharakteristik unterscheidet, und ein Aussenden 209 einer Warnmeldung oder einer Fehlermeldung ansprechend auf das Erfassen der fehlenden Authentizität der Kommunikationsdaten.

Gemäß einer Ausführungsform ist die Authentifizierungsvorrichtung 100 als Security-Observer 100 ausgebildet. Der Security-Observer 100 überwacht eine Bus-Kommunikation in dem Kommunikationsnetzwerk 101 und prüft diese auf Richtigkeit. Insbesondere überprüft der Prozessor 105 der Authentifizierungsvorrichtung 100 dabei die Authentizität von Kommunikationssignalen oder Botschaften in dem Kommunikationsnetzwerk 101, welche von Kommunikationsdaten gebildet werden.

Erfasst der Security-Observer 100 ein Verhalten, dass nicht zum bisherigen Verhalten auf dem Fahrzeugbus passt, so kann er versuchen zu erkennen, wodurch dieses Verhalten verursacht wird. Ferner kann der Security-Observer 100 notfalls einen Security-Alarm auslösen.

Zum Erkennen von Abweichungen bei der Bus-Kommunikation, insbesondere von Kommunikationssignalen mit fehlender Authentizität, kann die Kommunikation von dem Security-Observer 100 wie folgt überprüft werden:
(i) Überprüfen eines richtigen Aufbaus und einer richtigen Länge der Kommunikationssignale, und überprüfen, ob sich die Kommunikationssignale an vorgegebene Zeitslots halten (falls der Fahrzeugbus 101 mit Zeitslots arbeitet).
(ii) Überprüfen einer logischen Abfolge der Kommunikationssignale: Einige Kommunikationssignale sind beispielsweise Reaktionen auf andere Kommunikationssignale oder stellen eine Weiterverarbeitung der Inhalte anderer Kommunikationssignale dar. Daher sollten diese Kommunikationssignale auch erst nach diesen Kommunikationssignalen auf dem Fahrzeugbus 101 erscheinen.
(iii) Überprüfen einer zeitlichen Abfolge der Kommunikationssignale: Einige Kommunikationssignale werden in regelmäßigen Zeitabständen, beispielsweise alle 10 ms, oder immer mit einem bestimmten zeitlichen Abstand, beispielsweise 1 ms, auf ein anderes Kommunikationssignal folgend übermittelt.
(iv) Überprüfen eines Inhalts der Kommunikationssignale: Hierbei kann der Prozessor 105 Inhalte unterschiedlicher Kommunikationssignale miteinander vergleichen und plausibilisieren. Anschließen kann der Prozessor 105 überprüfen, ob ein technischer Fehler, beispielsweise aufgrund eines Ausfalls eines Sensors, oder ein mutwilliger Angriff vorliegt. Der Prozessor 105 kann die Unterscheidung zwischen einem technischen Fehler und einem mutwilligen Angriff in erster Näherung mittels physikalischer oder anderer Beziehungsmodelle durchführen. Dabei können alle Erkennungsmethoden auf einer Modellannahme des Verhaltens der Kommunikation im Normalfall beruhen. Ferner kann der Prozessor 105 klassische Intrusion Detection Verfahren durchführen.

Gemäß einer Ausführungsform erfolgt die Authentifizierung von Kommunikationsdaten entweder auf der Basis eines Schwellwertverfahrens, bei dem beispielsweise nur festgestellt wird, ob Kommunikationsdaten authentisch oder nicht authentisch sind. Ferner kann der Prozessor 105 bei der Authentifizierung der Kommunikationsdaten auch eine Integrität der Kommunikationsdaten erfassen.

Der Prozessor 105 kann beispielsweise bereits kleinere Abweichungen der Charakteristik der Kommunikationsdaten von der Referenzcharakteristik erfassen, selbst wenn diese noch nicht als kritisch zu bewerten sind. Dies ermöglicht schon frühzeitig abnormale oder potentiell gefährdete Fahrzeugsysteme, welche an das Kommunikationsnetz 101 angeschlossen sind, zu ignorieren oder zu deaktivieren, beispielsweise indem einem Bus-Knoten der entsprechenden Fahrzeugsysteme ein Signal zur Deaktivierung der Kommunikation gesendet wird. Auf diese Art und Weise kann eine schrittweise Abschottung des gestörten Fahrzeugsystems von dem Kommunikationsnetzwerk 101 erfolgen.

Gemäß einer Ausführungsform wird die Referenzcharakteristik der Kommunikationsdaten zunächst generisch für unterschiedliche Fahrsituation bzw. Verhaltensweisen des Fahrers bestimmt und in dem Speicher 107 gespeichert. Anschließend kann die Referenzcharakteristik während einer Fahrzeugenwicklung auf der Basis von Messdaten zu definierten Messsituationen und/oder Verhaltensmodellen ergänzt bzw. eingelernt werden. Somit kann der Security-Observer 100 unabhängig vom Verhalten anderer ECUs am Fahrzeugbus 101 entwickelt werden, und kann präzise auf die jeweilige Systemumgebung angepasst bzw. eingestellt werden.

Gemäß einer Ausführungsform kann anstelle eines solchen a-priori-Konzepts zur Ermittlung der Referenzcharakteristik ein adaptiver Security-Observer 100 eingesetzt werden. Bei einem adaptiven Security-Observer 100 erfasst der Prozessor 105 eine Veränderung des Kommunikationssystems 101, insbesondere der typischen Kommunikationsdaten, welche in dem Kommunikationssystem 101 übermittelt werden, mit der Zeit und ergänzt die gespeicherten Referenzcharakteristiken fortlaufend.

Gemäß einer Ausführungsform können verschiedene Ansätze zum Erstellen der Referenzcharakteristik miteinander kombiniert werden, beispielsweise indem einige Regeltypen während der Entwicklung angepasst werden und andere adaptiv erst während der ersten Fahrkilometer des Fahrzeugs dazugelernt werden.

Gemäß einer Ausführungsform wird die Authentifizierungsvorrichtung 100 mit einer Sicherheitsüberwachungsvorrichtung (Safety-Observer) in einem Steuergerät des Fahrzeugs kombiniert. Somit können diverse Analysemethoden für beide Ziele, Safety und Security, verwendet werden und somit Synergien genutzt werden. Bei der kombinieten Anwendung der Authentifizierungsvorrichtung 100 und der Sicherheitsüberwachungsvorrichtung können die folgenden unterschiedlichen Fehler und/oder Gefahren erfasst werden:
(i) Mutwillige Eingriffe in das Kommunikationsnetzwerk 101 (Intrusion, Securityrelevant)
(ii) Ausfälle des Kommunikationsnetzwerks 101 (beispielsweise aufgrund eines Ausfalls von Bauteilen)
(iii) Fehlfunktionen in dem Kommunikationsnetzwerk 101 (beispielsweise falsche Ergebnisse aufgrund von Entwicklungsfehlern)
(iv) Unvorhersehbare Reaktionen des Kommunikationsnetzwerks 101, weil das System außerhalb seines Auslegungs-Betriebsbereichs betrieben wird (beispielsweise höhere Umgebungstemperaturen, Erschütterungen, Beschleunigungen oder unzulässige Eingänge an den elektrischen oder Software-Schnittstellen, etc.)

Gemäß einer Ausführungsform speichert der Prozessor 105 die Authentifizierungsergebnisse des Security-Observers 100 in dem Speicher 107. Der Speicher 107 kann hierzu einen Event Data Recorder umfassen. Somit kann auch im Nachhinein ermittelt werden, aus welchem Grund eine Fehlfunktion aufgetreten ist. Der Event Data Recorder kann aber auch in einem anderen Steuergerät untergebracht werden.

Gemäß einer Ausführungsform speichert der Prozessor 105 zusätzlich ein Security-Integritätsmaß in dem Speicher 107 ab. Der Prozessor 105 kann das Security-Integritätsmaß auf der Basis einer Entscheidungsregel bestimmen, wobei das Security-Integritätsmaß eine Schwere bzw. eine Priorität eines erfassten Fehlers definiert. Auf diese Art und Weise kann der Verlauf der Fehlfunktion bzw. eine Verkettung von Ereignissen, welche zu dem Fehler geführt hat, leichter rekonstruiert werden. Der Speicher kann dabei auch in einem anderen Steuergerät untergebracht werden.

Gemäß einer Ausführungsform kann durch den zentralen Security-Observer 100 der Aufwand für die Security-Überwachung in dem Fahrzeug reduziert werden, da diese nicht in jeder ECU des Fahrzeugs erneut durchgeführt werden muss, sondern nur in einer einzigen ECU oder einer geringen Zahl an ECUs vorhanden sein muss. Durch die Kombination mit einem Safety-Observer können zudem Synergien bzgl. der Algorithmik erzielt werden und damit auch differenziertere Aussagen abgeleitet werden.

### BEZUGSZEICHENLISTE

- 100: Authentifizierungsvorrichtung
- 101: Kommunikationsnetzwerk
- 103: Kommunikationsschnittstelle
- 105: Prozessor
- 107: Speicher

- 200: Verfahren zum Authentifizieren von Kommunikationsdaten in einem Fahrzeug
- 201: Empfangen
- 203: Erfassen
- 205: Authentifizieren
- 207: Erfassen
- 209: Aussenden

## Patentansprüche

1. Authentifizierungsvorrichtung (100) für ein Fahrzeug, wobei das Fahrzeug ein Kommunikationsnetzwerk (101) zum Übermitteln von Kommunikationsdaten aufweist, mit:
einer Kommunikationsschnittstelle (103), welche mit dem Kommunikationsnetzwerk (101) des Fahrzeugs verbindbar ist, wobei die Kommunikationsschnittstelle (103) ausgebildet ist, die Kommunikationsdaten zu empfangen; und
einem Prozessor (105), welcher ausgebildet ist, eine Charakteristik der empfangenen Kommunikationsdaten zu erfassen, wobei der Prozessor (105) ausgebildet ist, die Kommunikationsdaten auf der Basis eines Vergleichs der erfassten Charakteristik mit einer Referenzcharakteristik zu authentifizieren, und eine Authentizität der Kommunikationsdaten zu erfassen, falls die Charakteristik der Kommunikationsdaten der Referenzcharakteristik entspricht, und eine fehlende Authentizität der Kommunikationsdaten zu erfassen, falls sich die Charakteristik der Kommunikationsdaten von der Referenzcharakteristik unterscheidet,
wobei der Prozessor (105) weiterhin ausgebildet ist, einen Empfänger der Kommunikationsdaten in dem Kommunikationsnetzwerk (101) zu erfassen und die Kommunikationsschnittstelle (103) ansprechend auf das Erfassen der Authentizität der Kommunikationsdaten zum Weiterleiten der Kommunikationsdaten an den Empfänger anzusteuern, und
wobei der Prozessor (105) ausgebildet ist, ansprechend auf das Erfassen der fehlenden Authentizität der Kommunikationsdaten eine Warnmeldung oder eine Fehlermeldung auszusenden, **dadurch gekennzeichnet, dass**
der Prozessor (105) ausgebildet ist, einen Grad der Abweichung der Charakteristik von der Referenzcharakteristik zu erfassen, wobei der Prozessor (105) ausgebildet ist, die Fehlermeldung auszusenden, falls der Grad der Abweichung einen ersten Schwellwert überschreitet, und eine Warnmeldung auszusenden, falls der Grad der Abweichung den ersten Schwellwert unterschreitet und einen zweiten Schwellwert überschreitet.

2. Authentifizierungsvorrichtung (100) nach Anspruch 1, wobei die Charakteristik der empfangenen Kommunikationsdaten und die Referenzcharakteristik eine der folgenden Charakteristika umfassen: ein Inhalt der Kommunikationsdaten, ein Aufbau der Kommunikationsdaten, eine logische Abfolge der Kommunikationsdaten, eine zeitliche Abfolge der Kommunikationsdaten, eine Länge eines Kommunikationssignals, welches von den Kommunikationsdaten gebildet wird.

3. Authentifizierungsvorrichtung (100) nach einem der Ansprüche 1 oder 2, wobei der Prozessor (105) ausgebildet ist, einen Absender der Kommunikationsdaten in dem Kommunikationsnetzwerk (101) zu erfassen, wobei der Prozessor (105) ausgebildet ist, ansprechend auf das Erfassen einer fehlenden Authentizität der Kommunikationsdaten, einen Teilabschnitt des Kommunikationsnetzwerks (101), welcher den Absender umfasst, von dem restlichen Kommunikationsnetzwerk (101) zu trennen.

4. Authentifizierungsvorrichtung (100) nach einem der vorstehenden Ansprüche, wobei die Authentifizierungsvorrichtung (100) einen Speicher (107) umfasst, wobei die Referenzcharakteristik in dem Speicher (107) gespeichert ist.

5. Authentifizierungsvorrichtung (100) nach Anspruch 4, wobei die Kommunikationsschnittstelle (103) ausgebildet ist, weitere Kommunikationsdaten in einem Einlernzeitintervall zu empfangen, wobei der Prozessor (105) ausgebildet ist, eine Charakteristik der weiteren Kommunikationsdaten zu erfassen und als Referenzcharakteristik in dem Speicher (107) zu speichern.

6. Authentifizierungsvorrichtung (100) nach einem der Ansprüche 3 bis 5, wobei der Prozessor (105) ausgebildet ist, die im Speicher (107) gespeicherte Referenzcharakteristik auf der Basis der erfassten Charakteristik der Kommunikationsdaten zu ergänzen, insbesondere kontinuierlich zu ergänzen.

7. Authentifizierungsvorrichtung (100) nach einem der vorstehenden Ansprüche, wobei die Kommunikationsschnittstelle (103) als BUS-Schnittstelle ausgebildet ist, wobei die BUS-Schnittstelle an das Kommunikationsnetzwerk (101) des Fahrzeugs, welches insbesondere als Fahrzeugbus ausgebildet ist, anschließbar ist.

8. Authentifizierungsvorrichtung (100) nach einem der vorstehenden Ansprüche, wobei der Prozessor (105) als Steuereinheit (Electronic Control Unit, ECU) des Fahrzeugs ausgebildet ist, oder in eine Steuereinheit des Fahrzeugs integriert ist.

9. Verfahren (200) zum Authentifizieren von Kommunikationsdaten in einem Fahrzeug, wobei das Fahrzeug ein Kommunikationsnetzwerk (101) zum Übermitteln der Kommunikationsdaten aufweist, mit:
Empfangen (201) der Kommunikationsdaten mit einer Kommunikationsschnittstelle (103), welche mit dem Kommunikationsnetzwerk (101) des Fahrzeugs verbindbar ist;
Erfassen (203) einer Charakteristik der empfangenen Kommunikationsdaten;
Authentifizieren (205) der Kommunikationsdaten auf der Basis eines Vergleichs der erfassten Charakteristik mit einer Referenzcharakteristik Erfassen einer Authentizität der Kommunikationsdaten, falls die Charakteristik der Kommunikationsdaten der Referenzcharakteristik entspricht, und Erfassen einer fehlenden Authentizität der Kommunikationsdaten, falls sich die Charakteristik der Kommunikationsdaten von der Referenzcharakteristik unterscheidet;
Erfassen eines Empfängers der Kommunikationsdaten in dem Kommunikationsnetzwerk (101); und
Ansteuern der Kommunikationsschnittstelle (103) ansprechend auf das Erfassen der Authentizität der Kommunikationsdaten zum Weiterleiten der Kommunikationsdaten an den Empfänger, und
Aussenden einer Warnmeldung oder eine Fehlermeldung, ansprechend auf das Erfassen der fehlenden Authentizität der Kommunikationsdaten, **gekennzeichnet durch** ein Erfassen eines Grades der Abweichung der Charakteristik von der Referenzcharakteristik und Aussenden der Fehlermeldung, falls der Grad der Abweichung einen ersten Schwellwert überschreitet, und Aussenden einer Warnmeldung, falls der Grad der Abweichung den ersten Schwellwert unterschreitet und einen zweiten Schwellwert überschreitet.

10. Fahrzeug, insbesondere Kraftfahrzeug, mit einer Authentifizierungsvorrichtung (100) nach einem der Ansprüche 1 bis 8.

## Claims

1. Authentication device (100) for a vehicle, wherein the vehicle has a communication network (101) for communicating communication data, comprising:
a communication interface (103), which is connectable to the communication network (101) of the vehicle, wherein the communication interface (103) is configured to receive the communication data; and
a processor (105) configured to detect a characteristic of the received communication data, wherein the processor (105) is configured to authenticate the communication data on the basis of a comparison of the detected characteristic with a reference characteristic and to detect an authenticity of the communication data if the characteristic of the communication data corresponds to the reference characteristic, and to detect a missing authenticity of the communication data if the characteristic of the communication data differs from the reference characteristic, wherein the processor (105) is furthermore configured to detect a receiver of the communication data in the communication network (101) and to control the communication interface (103) in response to the detection of the authenticity of the communication data for forwarding the communication data to the receiver, and
wherein the processor (105) is configured to send a warning message or an error message in response to the detection of the missing authenticity of the communication data, **characterized in that** the processor (105) is configured to detect a degree of the deviation of the characteristic from the reference characteristic, wherein the processor (105) is configured to send the error message if the degree of the deviation exceeds a first threshold value, and to send a warning message if the degree of the deviation falls below the first threshold value and exceeds a second threshold value.

2. Authentication device (100) according to Claim 1, wherein the characteristic of the received communication data and the reference characteristic comprise one of the following characteristics: a content of the communication data, a structure of the communication data, a logical sequence of the communication data, a temporal sequence of the communication data, a length of a communication signal formed by the communication data.

3. Authentication device (100) according to either of Claims 1 and 2, wherein the processor (105) is configured to detect a sender of the communication data in the communication network (101), wherein the processor (105) is configured to separate a portion of the communication network (101) that comprises the sender from the rest of the communication network (101) in response to the detection of a missing authenticity of the communication data.

4. Authentication device (100) according to any of the preceding claims, wherein the authentication device (100) comprises a memory (107), wherein the reference characteristic is stored in the memory (107).

5. Authentication device (100) according to Claim 4, wherein the communication interface (103) is configured to receive further communication data in a learning time interval, wherein the processor (105) is configured to detect a characteristic of the further communication data and to store it as reference characteristic in the memory (107).

6. Authentication device (100) according to any of Claims 3 to 5, wherein the processor (105) is configured to supplement, in particular continuously supplement, the reference characteristic stored in the memory (107) on the basis of the detected characteristic of the communication data.

7. Authentication device (100) according to any of the preceding claims, wherein the communication interface (103) is configured as a BUS interface, wherein the BUS interface is connectable to the communication network (101) of the vehicle, configured in particular as a vehicle bus.

8. Authentication device (100) according to any of the preceding claims, wherein the processor (105) is configured as a control unit (Electronic Control Unit, ECU) of the vehicle, or is integrated in a control unit of the vehicle.

9. Method (200) for authenticating communication data in a vehicle, wherein the vehicle has a communication network (101) for communicating the communication data, comprising:
receiving (201) the communication data by means of a communication interface (103), which is connectable to the communication network (101) of the vehicle;
detecting (203) a characteristic of the received communication data; authenticating (205) the communication data on the basis of a comparison of the detected characteristic with a reference characteristic;
detecting an authenticity of the communication data if the characteristic of the communication data corresponds to the reference characteristic, and detecting a missing authenticity of the communication data if the characteristic of the communication data differs from the reference characteristic;
detecting a receiver of the communication data in the communication network (101); and
controlling the communication interface (103) in response to the detection of the authenticity of the communication data for forwarding the communication data to the receiver, and
sending a warning message or an error message in response to the detection of the missing authenticity of the communication data, **characterized by** detecting a degree of the deviation of the characteristic from the reference characteristic and sending the error message if the degree of the deviation exceeds a first threshold value, and
sending a warning message if the degree of the deviation falls below the first threshold value and exceeds a second threshold value.

10. Vehicle, in particular motor vehicle, comprising an authentication device (100) according to any of Claims 1 to 8.

## Revendications

1. Dispositif d'authentification (100) pour un véhicule, dans lequel le véhicule présente un réseau de communication (101) pour transmettre des données de communication, comprenant : une interface de communication (103) qui peut être reliée au réseau de communication (101) du véhicule, l'interface de communication (103) étant réalisée pour recevoir les données de communication ; et
un processeur (105) qui est réalisé pour détecter une caractéristique des données de communication reçues, dans lequel le processeur (105) est réalisé pour authentifier les données de communication sur la base d'une comparaison de la caractéristique détectée avec une caractéristique de référence, et pour détecter une authenticité des données de communication si la caractéristique des données de communication correspond à la caractéristique de référence, et pour détecter une absence d'authenticité des données de communication si la caractéristique des données de communication est différente de la caractéristique de référence, dans lequel le processeur (105) est en outre réalisé pour détecter un destinataire des données de communication dans le réseau de communication (101) et pour piloter l'interface de communication (103) en réponse à la détection de l'authenticité des données de communication pour la retransmission des données de communication au destinataire, et
dans lequel le processeur (105) est réalisé pour émettre un avertissement ou un message d'erreur en réponse à la détection de l'absence d'authenticité des données de communication, **caractérisé en ce que** le processeur (105) est réalisé pour détecter un degré de l'écart de la caractéristique par rapport à la caractéristique de référence, dans lequel le processeur (105) est réalisé pour émettre le message d'erreur si le degré de l'écart dépasse une première valeur seuil, et pour émettre un avertissement si le degré de l'écart soupasse la première valeur seuil et dépasse une deuxième valeur seuil.

2. Dispositif d'authentification (100) selon la revendication 1, dans lequel la caractéristique des données de communication reçues et la caractéristique de référence comprennent l'une des caractéristiques suivantes : un contenu des données de communication, une structure des données de communication, une séquence logique des données de communication, une séquence temporelle des données de communication, une durée d'un signal de communication qui est formé par les données de communication.

3. Dispositif d'authentification (100) selon l'une quelconque des revendications 1 ou 2, dans lequel le processeur (105) est réalisé pour détecter un expéditeur des données de communication dans le réseau de communication (101), dans lequel, en réponse à la détection d'une absence d'authenticité des données de communication, le processeur (105) est réalisé pour séparer du reste du réseau de communication (101) une section du réseau de communication (101) qui comprend l'expéditeur.

4. Dispositif d'authentification (100) selon l'une quelconque des revendications précédentes, dans lequel le dispositif d'authentification (100) comprend une mémoire (107), la caractéristique de référence étant stockée dans la mémoire (107).

5. Dispositif d'authentification (100) selon la revendication 4, dans lequel l'interface de communication (103) est réalisée pour recevoir des données de communication supplémentaires dans un intervalle de temps d'apprentissage, dans lequel le processeur (105) est réalisé pour détecter une caractéristique des données de communication supplémentaires et pour les stocker sous forme de caractéristique de référence dans la mémoire (107).

6. Dispositif d'authentification (100) selon l'une quelconque des revendications 3 à 5, dans lequel le processeur (105) est réalisé pour compléter, en particulier compléter en continu, la caractéristique de référence stockée dans la mémoire (107) sur la base de la caractéristique détectée des données de communication.

7. Dispositif d'authentification (100) selon l'une quelconque des revendications précédentes, dans lequel l'interface de communication (103) est réalisée sous forme d'interface BUS, dans lequel l'interface BUS peut être connectée au réseau de communication (101) du véhicule qui est réalisé en particulier sous la forme d'un bus de véhicule.

8. Dispositif d'authentification (100) selon l'une quelconque des revendications précédentes, dans lequel le processeur (105) est réalisé sous forme d'unité de commande (« electronic control unit », ECU) du véhicule ou est intégré dans une unité de commande du véhicule.

9. Procédé (200) permettant d'authentifier des données de communication dans un véhicule, dans lequel le véhicule présente un réseau de communication (101) pour transmettre les données de communication, comprenant les étapes consistant à :
recevoir (201) les données de communication à l'aide d'une interface de communication (103) qui peut être reliée au réseau de communication (101) du véhicule ;
détecter (203) une caractéristique des données de communication reçues ;
authentifier (205) les données de communication sur la base d'une comparaison de la caractéristique détectée avec une caractéristique de référence, détecter une authenticité des données de communication si la caractéristique des données de communication correspond à la caractéristique de référence, et détecter une absence d'authenticité des données de communication si la caractéristique des données de communication est différente de la caractéristique de référence ;
détecter un destinataire des données de communication dans le réseau de communication (101) ; et
piloter l'interface de communication (103) en réponse à la détection de l'authenticité des données de communication pour retransmettre les données de communication au destinataire, et
émettre un avertissement ou un message d'erreur en réponse à la détection de l'absence d'authenticité des données de communication, **caractérisé par** la détection d'un degré de l'écart de la caractéristique par rapport à la caractéristique de référence, et par l'émission du message d'erreur si le degré de l'écart dépasse une première valeur seuil, et
par l'émission d'un avertissement si le degré de l'écart soupasse la première valeur seuil et dépasse une deuxième valeur seuil.

10. Véhicule, en particulier véhicule automobile, comprenant un dispositif d'authentification (100) selon l'une quelconque des revendications 1 à 8.
